# EUROPEAN PATENT APPLICATION

(11) **EP 2 947 789 A1**
(43) Date of publication of application: **25.11.2015**
(21) Application number: 15164383.0
(22) Date of filing: 21.04.2015
(51) Int. Cl.: H04B 7/185

(54) **SATELLITE COMMUNICATION SYSTEM WITH TIME-MULTIPLEXED COMMUNICATION FROM SPOT BEAM DEFINED SUB-REGIONS**

(30) Priority: 20.05.2014 US 201414281935
(71) Applicant: Delphi Technologies, Inc., Troy MI 48007 (US)
(72) Inventor: Dibiaso, Eric A., Lebanon, Pennsylvania 17042 (US)
(74) Representative: Neill, Andrew Peter

(57) **Abstract**

A communication system (10) includes a satellite (20) and a ground station (18). The satellite (20) is configured to preferentially receive signals (12) from each of a plurality of sub-regions (16) within a region (14) of communication of the satellite (20). The ground station (18) is configured to determine a location of the ground station (18), determine in which of the sub-regions (16) that the ground station (18) resides based on the location, and transmit a signal (12) to the satellite (20) during a time-interval assigned to the sub-region (16). The ground stations (18) time-multiplex the transmission of signals (12) from various ground stations (18) to the satellite (20) based on which sub-region (16) of the larger region (14) (e.g. the continental United States or CONUS) that the ground station (18) resides. The time multiplexing is such that ground stations (18) in one region (14) are not transmitting signals (12) to the satellite (20) during the same time interval as ground stations (18) in adjacent sub-regions (16).

## Description

### TECHNICAL FIELD OF INVENTION

This disclosure generally relates to a terrestrial/satellite communication system, and more particularly relates to a ground station configured to determine a location of the ground station, and transmit a signal to the satellite during a time-interval assigned to the location in order to time-multiplex communication from spot beam defined sub-regions.

### BACKGROUND OF INVENTION

Terrestrial/Satellite communication systems with various protocols and standards to optimize desired two-way communication services have been proposed. For example, the European Telecommunications Standards Institute (ETSI) has proposed an Enhanced Spread Spectrum Aloha (E-SSA) protocol or standard that uses iterative processing to maximize the number of ground transceivers that can transmit to a satellite transceiver or satellite system at any given time. Aloha is a term used to describe communications where ground transceivers can transmit a message at any time and then check to see if the message was received by a satellite transceiver or satellite system. If too many ground transceivers send messages at the same time, 'message collisions' may occur, and the satellite transceiver may not detect the message.

Some satellite communication systems use an antenna array to selectively communicate with transceivers in various sub-regions of the region of the earth 'viewed' by the antenna array. It has been proposed that adjacent sub-regions use three distinct communication frequencies to separate communications from adjacent sub-regions. However, this undesirably reduces the communication bandwidth of each sub-region.

### SUMMARY OF THE INVENTION

Described herein are a communication system and a ground station for the communication system. The ground stations time-multiplex the transmission of signals from various ground stations to the satellite based on which sub-region of the larger region (e.g. the continental United States or CONUS) that the ground station resides. The time multiplexing is such that ground stations in one region are not transmitting signals to the satellite during the same time interval as ground stations in adjacent sub-regions. In this way, a larger number of ground stations in the larger region that can transmit signals to the satellite without a substantial increase in the occurrences of collisions.

In accordance with one embodiment, a communication system is provided. The communication system includes a satellite and a ground station. The satellite is configured to preferentially receive signals from each of a plurality of sub-regions within a region of communication of the satellite. The ground station is configured to determine a location of the ground station, determine in which of the sub-regions that the ground station resides based on the location, and transmit a signal to the satellite during a time-interval assigned to the sub-region.

In another embodiment, a ground station of communication system is provided. The system includes a satellite configured to preferentially receive signals from each of a plurality of sub-regions within a region of communication of the satellite. The ground station includes a global position device, a memory device, a processor, and a transmitter. The global position device is operable to determine a location of the ground station. The memory device is operable to store and recall boundaries of the sub-regions. The processor is configured to determine in which of the sub-regions the ground station resides based on the location. The transmitter is operable to transmit a signal to the satellite during a time-interval assigned to the sub-region.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a terrestrial/satellite communication system in accordance with one embodiment; and
Fig. 2 is a block diagram of a ground station of the system of Fig. 1 in accordance with one embodiment.

### DETAILED DESCRIPTION

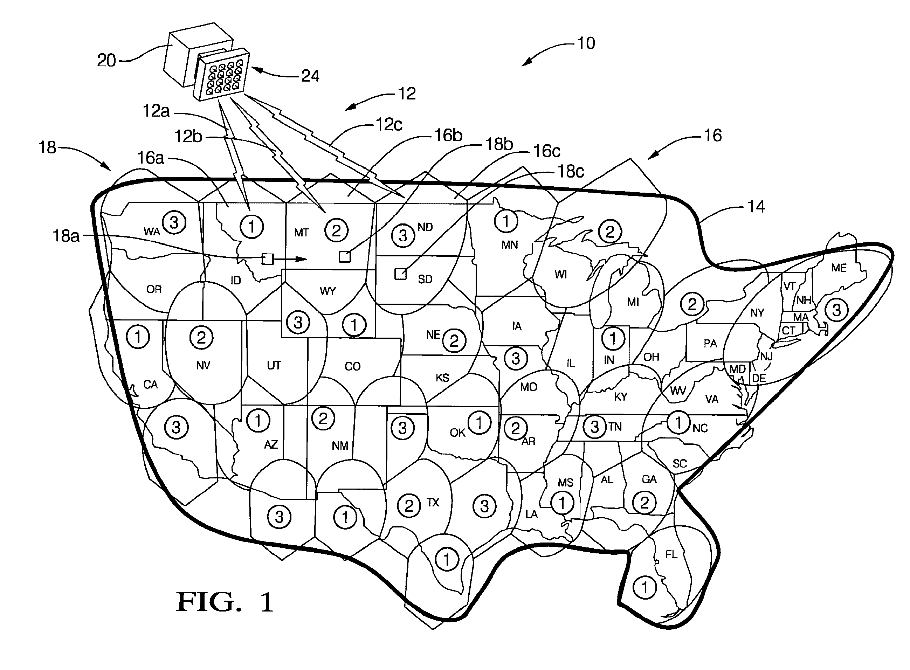

Fig. 1 illustrates a non-limiting example of a terrestrial/satellite communication system, hereafter the system 10. The system 10 includes a satellite 20 that is configured to preferentially receive signals 12 from each of a plurality of sub-regions 16 within a region 14 of communication of the satellite 20. As used herein, preferentially receive means that the satellite 20 is able to operate (i.e. focus) an antenna array 24 to selectively or preferentially receive, for example, a second signal 12b from a second sub-region 16b while ignoring or suppressing signals from adjacent sub-regions such as a first signal 12a from a first sub-region 16a, and a third signal 12c from a third sub-region 16c. In other words, the antenna array 24 is operable to define a plurality of spot beams that preferentially receive signals 12 from each of the plurality of sub-regions 16.

Operation of the antenna array 24 in this manner is sometimes referred to as spot beam forming, where the spot beams of the antenna array determine the borders or boundaries of the sub-regions 16. The satellite 20 may also broadcast a common signal across the entire region, or broadcast distinct signals to each of the sub-regions 16, or a combination thereof using, for example, hierarchical modulation. In general, hierarchical modulation is known, and is commonly used to simultaneously transmit two separate data-streams. The two data-streams may be, for example, a high priority data stream based on high priority content and a low priority data stream based on low priority content. In this non-limiting example the region 14 is illustrated as the continental United States (CONUS). However, other regions such as Europe, or a larger region such as most of the North America continent are contemplated. In this non-limiting example, the region 14 corresponding to the CONUS is divided into thirty-one sub-regions.

The system 10 is generally configured to manage or control communications between the satellite 20 and a plurality of ground stations 18, such as a first ground station 18a in the first sub-region 16a, a second ground station 18b in the second sub-region 16b, and a third ground station 18c in the third sub-region 16c. Non-limiting examples of ground stations include transceivers installed in a vehicles such as automobiles, trucks, trains, or aircraft, or a hand held device operated by a pedestrian, or a transceiver installed in a residence or other building such as a business or place of commerce. As will become apparent in the description that follows, the advantages of the system 10 and the ground stations 18 described herein are especially useful when the ground station is in motion, particularly when transitioning from one sub-region into another sub-region as indicated by the arrow on the first ground station 18a.

The system 10 may also include a base station (not shown) that may generally operate the satellite 20. By way of example and not limitation, the satellite 20 may merely be a repeater for a base signal from the base station. It should be appreciated that signal processing or other actions described herein that are attributed to the satellite 20 may also be attributed to the base station. Alternatively, the satellite 20 itself may perform some of the signal processing described herein, and may determine information that is sent to the ground stations 18, where the information sent is determined by the satellite 20 independent of information sent via the base signal from the base station.

Each of the sub-regions 16 includes a circled 1, 2, or 3 that indicates which of three distinct time intervals is assigned to each of the sub-regions 16, which indicates which of three distinct time intervals that a ground station within a particular sub-region is authorized to transmit a signal 12 to the satellite 20. As can be seen in Fig. 1, the arrangement of the boundaries that define each of the sub-regions 16 is such that no two sub-regions assigned the same time interval are adjacent. In other words, there are no adjacent sub-regions assigned the same time interval that share a portion of the border that defines the sub-region. As such, the spot beams from the antenna array 24 can readily distinguish signals from each of the sub-regions 16 that are assigned the same time interval even though the ground stations 18 in each of these shared time interval sub-regions is transmitting at the same carrier frequency.

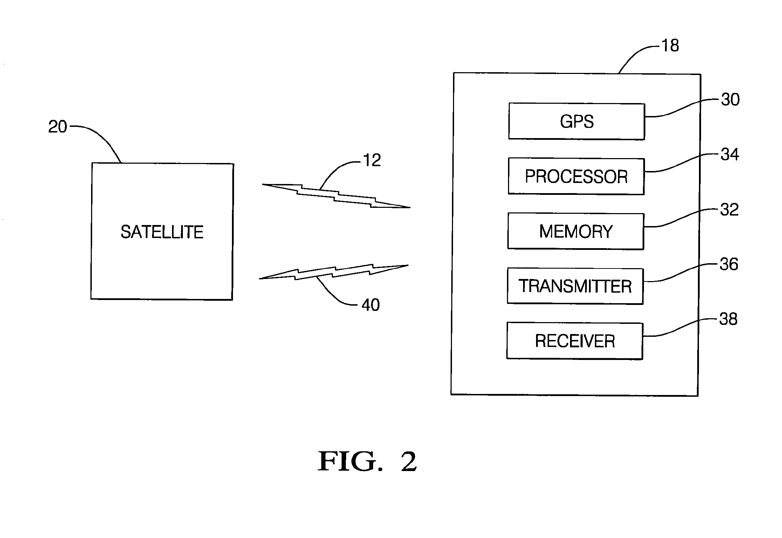

Fig. 2 illustrates a non-limiting example of any one of the ground stations 18 (e.g. 18a, 18b, or 18c). The ground station 18 is generally configured to determine a location of the ground station. As such, the ground station may include or be equipped with a global position device 30 operable to determine the location of the ground station 18. The global position device may include an integrated circuit chip set and a suitable antenna to receive and process signals from satellites that are part of a global positioning system, as will be recognized by those in the art. By equipping the ground station 18 with a the global position device 30, the ground station is able to self-determine the location (e.g. latitude and longitude) of the ground station 18, so does not need to rely on the satellite 20 to determine the location of the ground station 18.

The ground station 18 is also generally configured to determine in which of the sub-regions 16 that the ground station 18 resides based on the location. Accordingly, the ground station may include a memory device 32 operable to store and recall the boundaries of the sub-regions 16. The boundaries of the sub-regions 16 may be preprogrammed into the memory device 32 when the ground station is manufactured, and may be periodically updated by, for example, a programming signal (not shown) from the satellite 20, or an internet connection, or other means known to those in the electronics arts.

The ground station 18 may also include a processor 34 configured to determine in which of the sub-regions 16 that the ground station 18 resides based on the location determined by the global position device 30. That is, the processor 34 may receive the location from the global position device 30, and determine in which of the sub-regions 16 that the ground station 18 resides by recalling the boundaries of the sub-regions 16 from the memory device 32. This allows the ground station 18 to autonomously determine which of the time intervals that the ground station is authorized to transmit a signal 12 to the satellite 20.

In order to transmit a signal 12 to the satellite 20, the ground station 18 may also include a transmitter 36 able to transmit the signal 12 to the satellite 20 during a time-interval assigned to the sub-region 16. The ground station 18 may also include a receiver 38 configured to receive broadcast signals from the satellite 20 which may include a time reference signal 40 that the processor 34 can use to determine when the time interval begins and ends, during which the ground station 18 is authorized to transmit the signal 12. Alternatively, the ground station 18 may receive a time reference signal from the global position device 30, as will be recognized by those in the art.

Accordingly, a communication system (the system 10) and a ground station 18 for the system 10 is provided. The ground station 18 is configured to determine the location of the ground station so that the ground station 18 can determine when (i.e. during which time interval) the ground station 18 is authorized to transmit the signal 12 to the satellite 20. Having predetermined time intervals that various ground stations in such a system are authorized helps to prevent signal interference or 'signal collisions' that may prevent a ground station from reliably communicating with the satellite 20. By organizing the time intervals relative to the sub-regions 16, the ground stations 18 are able to communicate using the full bandwidth authorized to the system 10, as opposed to restricting the bandwidth and not coordinating the times during which various ground stations are authorized to transmit signals.

While this invention has been described in terms of the preferred embodiments thereof, it is not intended to be so limited, but rather only to the extent set forth in the claims that follow.

## Claims

1. A communication system (10) comprising:
a satellite (20) configured to preferentially receive signals (12) from each of a plurality of sub-regions (16) within a region (14) of communication of the satellite (20); and
a ground station (18) configured to determine a location of the ground station (18), determine in which of the sub-regions (16) that the ground station (18) resides based on the location, and transmit a signal (12) to the satellite (20) during a time-interval assigned to the sub-region (16).

2. The system (10) in accordance with claim 1, wherein the satellite (20) includes an antenna array (24) operable to define a plurality of spot beams that preferentially receive signals (12) from each of the plurality of sub-regions (16).

3. The system (10) in accordance with claim 1, wherein the ground station (18) includes a global position device (30) operable to determine a location of the ground station (18).

4. The system (10) in accordance with claim 1, wherein the ground station (18) includes a memory device (32) operable to store and recall boundaries of the sub-regions (16).

5. The system (10) in accordance with claim 1, wherein the time interval is determined based on a time reference signal (40) broadcasted by the satellite (20).

6. A ground station (18) of communication system (10), wherein the system (10) includes a satellite (20) configured to preferentially receive signals (12) from each of a plurality of sub-regions (16) within a region (14) of communication of the satellite (20), said ground station (18) comprising:
a global position device (30) operable to determine a location of the ground station (18);
a memory device (32) operable to store and recall boundaries of the sub-regions (16);
a processor (34) configured to determine in which of the sub-regions (16) the ground station (18) resides based on the location; and
a transmitter (36) operable to transmit a signal (12) to the satellite (20) during a time-interval assigned to the sub-region (16).

7. The ground station (18) in accordance with claim 6, wherein the ground station (18) further comprises a receiver (38) operable to receive a time reference signal (40) broadcasted by the satellite (20), wherein the processer is further configured to determine the time interval based on the time reference signal (40).
